# EUROPEAN PATENT APPLICATION

(11) **EP 3 321 463 A1**
(43) Date of publication of application: **16.05.2018**
(21) Application number: 16821188.6
(22) Date of filing: 14.06.2016
(51) Int. Cl.: E05F 15/75, B60J 1/00, E05F 15/46, E05F 15/689

(54) **OPENING AND CLOSING CONTROL DEVICE**

(30) Priority: 07.07.2015 JP 2015136090
(71) Applicant: Kabushiki Kaisha Tokai-Rika-Denki-Seisakusho, Niwa-gun, Aichi 480-0195 (JP)
(72) Inventor: SHITARA, Shuji, Niwa-gun Aichi 480-0195 (JP)
(74) Representative: TBK
(86) International application number: PCT/JP2016/067647
(87) International publication number: WO 2017/006718

(57) **Abstract**

An opening/closing controller that controls movement of an opening/closing body includes an entrapment detection sensor that detects entrapment when the opening/closing body moves and a control unit that performs a switch mode control (P2 to P4) using the entrapment detection sensor as an input switch for an opening/closing body operation when detecting an operation input to the entrapment detection sensor while movement of the opening/closing body is stopped (P2).

## Description

### TECHNICAL FIELD

The present invention relates to an opening/closing controller that controls movement of an opening/closing body.

### BACKGROUND ART

Patent document 1 discloses a technique that arranges an electrostatic sensor on a door window, which is one example of an opening/closing body, and detects entrapment with the electrostatic sensor. When the electrostatic sensor detects entrapment as the door window closes, the movement of the door window is reversed. This releases an entrapment subject from the door window.

### PRIOR ART DOCUMENT

Patent Document 1: Japanese Laid-Open Patent Publication No. 2005-314949

### SUMMARY OF THE INVENTION

### PROBLEMS THAT ARE TO BE SOLVED BY THE INVENTION

A sensor that detects entrapment in a power window device (for example, electrostatic sensor) is used exclusively for entrapment detection.

It is an object of the present invention to provide an opening/closing controller that allows the entrapment detection sensor to be used for other purposes.

### MEANS FOR SOLVING THE PROBLEM

In one aspect, an opening/closing controller that controls movement of an opening/closing body includes an entrapment detection sensor that detects entrapment when the opening/closing body moves and a control unit that performs a switch mode control using the entrapment detection sensor as an input switch for an opening/closing body operation when detecting an operation input to the entrapment detection sensor while movement of the opening/closing body is stopped.

In this configuration, the entrapment detection sensor can be used for another purpose by using the entrapment detection sensor as an input switch for an opening/closing body operation when the opening/closing body is stopped.

### EFFECT OF THE INVENTION

In the present invention, the entrapment detection sensor can be used for another purpose.

### BRIEF DESCRIPTION OF THE DRAWINGS

Fig. 1 is a schematic diagram illustrating the configuration of a power window device.
Fig. 2 is a timing chart for a case that uses an electrostatic sensor in an automatic up operation.
Fig. 3 is a timing chart for a case that uses the electrostatic sensor in an automatic down operation.

### EMBODIMENTS OF THE INVENTION

One embodiment of an opening/closing controller will now be described.

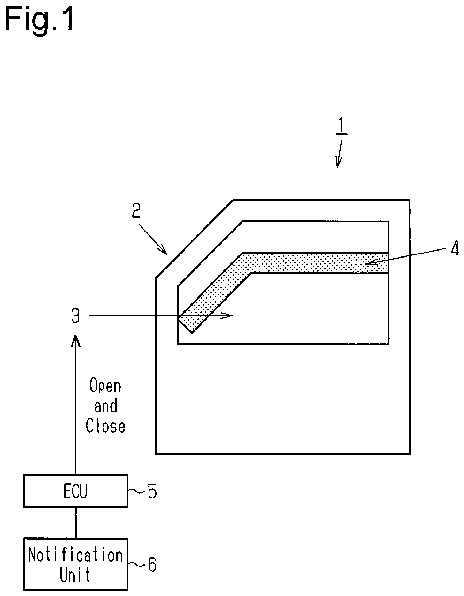

As illustrated in Fig. 1, a power window device 1 is one example of the opening/closing controller. A door 2 of a vehicle includes a window glass 3 that is subject to the control of the power window device 1. The power window device 1 controls the opening and closing movements of the window glass 3. The opening movement of the window glass 3 is defined by a lowering movement of the window glass 3, and the closing movement of the window glass 3 is defined by a lifting movement of the window glass 3. The window glass 3 corresponds to an opening/closing body. An electrostatic sensor 4, which is one example of an entrapment detection sensor, is arranged on an upper end surface of the window glass 3 or on a side surface of the window glass 3 facing the passenger compartment proximate to an upper end. The electrostatic sensor 4 is one example of a contactless sensor.

The power window device 1 includes an electronic control unit (ECU) 5 that centrally controls the opening and closing movements of the window glass 3 and an operation switch (not illustrated) used for an operation input that starts the opening or closing movement of the window glass 3. The operation switch is arranged near a seat. When an operation input is performed on the operation switch, the operation input is recognized by the ECU 5. As a result, when a user performs an opening operation on the operation switch, an opening movement lowers the window glass 3 under the control of the ECU 5. When the user performs a closing operation on the operation switch, a closing movement lifts the window glass 3 under the control of the ECU 5.

The opening operation and the closing operation can both be performed as either one of a manual operation that stops the movement of the window glass 3 when the manual operation is cancelled and an automatic operation that continues movement of the window glass 3 until the window glass 3 reaches a fully-open position or a fully-closed position. In the automatic operation, an operation for continuing the lowering movement of the window glass 3 until the window glass 3 reaches the fully-open position is referred to as the "automatic down operation," and an operation for continuing the lifting movement of the window glass 3 until the window glass 3 reaches the fully-closed position is referred to as the "automatic up operation."

When the electrostatic sensor 4 detects entrapment during a lifting movement of the window glass 3 started as an automatic up operation, the ECU 5 reverses movement of the window glass 3. This releases an entrapment subject from the window glass 3.

Further, when the ECU 5 detects an operation input to the electrostatic sensor 4 (for example, touch operation on window glass 3 with side of hand or arm) while movement of the window glass 3 is stopped, the ECU 5 performs a switch mode control that uses the electrostatic sensor 4 as an input switch for the opening and closing operations of the window glass 3. The ECU 5 corresponds to a control unit. The ECU 5 is connected to a notification unit 6 and controls notification operations of the notification unit 6. One example of the notification operation is a voice output. In the present example, a voice output device is used as the notification unit 6.

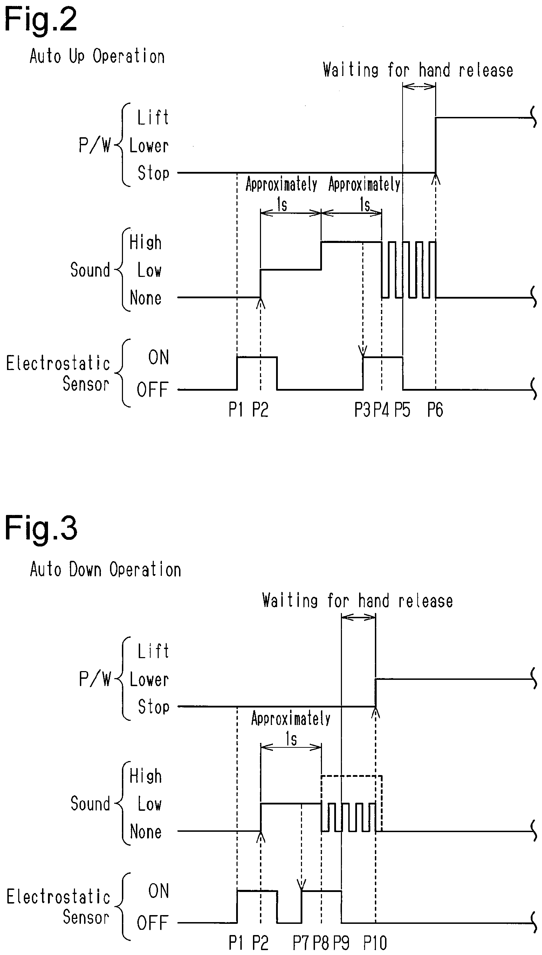

The operation of the power window device 1 will now be described. Figs. 2 and 3 illustrate a switch mode control performed by the ECU 5.

Referring to Fig. 2, while movement of the window glass 3 is stopped, a touch operation performed on the electrostatic sensor 4 is started at point t1. Detection of the touch operation at point P2 starts a switch mode control using the electrostatic sensor 4 as an input switch for the opening and closing operations of the window glass 3. That is, the ECU 5 detects the first touch operation as a switch mode start request for starting a switch mode control. For example, during the switch mode control, after a low-pitched "Do" is continuously output from the notification unit 6 for approximately the first second, a high-pitched "Do" is continuously output for approximately the next second.

The output of the first low-pitched "Do" suggests that a lowering operation switch mode control using the electrostatic sensor 4 as a lowering movement instruction input switch of the window glass 3 is being performed. Further, the output of the next high-pitched "Do" suggests that a lifting operation switch mode control using the electrostatic sensor 4 as a lifting movement instruction input switch of the window glass 3 is being performed. That is, the lifting and lowering of the window glass 3 can be easily associated with sound pitches.

While a high-pitched "Do" is being continuously output for approximately one second, a touch operation on the electrostatic sensor 4 is restarted at point P3. When the touch operation is detected at point P4, the touch operation is accepted as an execution request. That is, in this case, the automatic up operation using the electrostatic sensor 4 is accepted as an execution request.

When the automatic up operation using the electrostatic sensor 4 is accepted, a high-pitched "Do" is intermittently output from the notification unit 6 as an acceptance response. After the acceptance response, when the touch operation on the electrostatic sensor 4 is cancelled at point P5, the lifting movement of the window glass 3 is started when the operation cancellation is detected at point P6.

Thus, under the condition that the touch operation on the electrostatic sensor 4 is cancelled before the execution period of the acceptance response expires, that is, in this case, during the period in which the high-pitched "Do" is being intermittently output, a lifting movement is performed on the window glass 3 in correspondence with the touch operation accepted as the execution request (automatic up operation in this case). In other words, the ECU 5 detects, as a starting trigger, a touch operation cancellation during the execution period of the acceptance response (cancellation waiting time) and invalidates the automatic up operation if the starting trigger is not detected after the automatic up operation execution request is accepted.

Referring to Fig. 3, while movement of the window glass 3 is stopped, a touch operation performed on the electrostatic sensor 4 is started at point t1. Detection of the touch operation at point P2 starts a switch mode control using the electrostatic sensor 4 as an input switch (in the same manner as Fig. 2). During the switch mode control, after a low-pitched "Do" is continuously output for approximately the first second, a high-pitched "Do" is continuously output for approximately the next second (in the same manner as Fig. 2). While a low-pitched "Do" is being continuously output for approximately one second, a touch operation on the electrostatic sensor 4 is restarted at point P7. When the touch operation is detected at point P8, the touch operation is accepted as an execution request. That is, in this case, the automatic down operation using the electrostatic sensor 4 is accepted as an execution request. Once the automatic down operation is accepted, there is no need to wait for an input of the automatic up operation (refer to broken line).

When the automatic down operation using the electrostatic sensor 4 is accepted, a low-pitched "Do" is intermittently output from the notification unit 6 as an acceptance response. After the acceptance response, when the touch operation on the electrostatic sensor 4 is cancelled at point P9, the lowering movement of the window glass 3 is started when the operation cancellation is detected at point P10.

Thus, under the condition that the touch operation on the electrostatic sensor 4 is cancelled before the execution period of the acceptance response expires, that is, in this case, during the period in which the low-pitched "Do" is being intermittently output, a lowering movement is performed on the window glass 3 in correspondence with the touch operation accepted as the execution request (automatic down operation in this case). In other words, the ECU 5 detects, as a starting trigger, a touch operation cancellation during the execution period of the acceptance response (cancellation waiting time) and invalidates the automatic down operation if the starting trigger is not detected after the automatic down operation execution request is accepted.

As described above, the present embodiment has the following advantages.
(1) The electrostatic sensor 4, which serves as an entrapment detection sensor, can be used for a purpose that differs from entrapment detection by using the electrostatic sensor 4 as an input switch for the opening and closing operations of the window glass 3 while movement of the window glass 3 is stopped.
(2) The electrostatic sensor 4 can be used for multiple purposes that differ from entrapment detection by using the electrostatic sensor 4 as an opening movement instruction input switch and as a closing movement instruction input switch.
(3) When the ECU 5 detects a touch operation on the electrostatic sensor 4 while movement of the window glass 3 is stopped, the ECU 5 performs a switch mode control while performing a notification operation using sound from the notification unit 6 as a response to the touch operation. In this configuration, the notification operation using sound allows the user to recognize that the switch mode control is being executed without the changing the field of view.
(4) The ECU 5 performs a lifting operation switch mode control that uses the electrostatic sensor 4 as a lifting movement instruction input switch with a notification operation performed with a higher one of two differently pitched sounds. Further, the ECU 5 performs a lowering operation switch mode control that uses the electrostatic sensor 4 as a lowering movement instruction input switch with a notification operation performed with the low-pitched sound. This configuration allows the user to easily associate the lifting and lowering of the window glass 3 using sound pitches to realize an intuitive operation.
(5) When the ECU 5 detects a further touch operation on the electrostatic sensor 4 while a notification operation using sound is being performed, the ECU 5 accepts the touch operation. In this configuration, the intention of the user can be properly understood by monitoring a further operation during a certain period in which a notification operation using sound is performed.
(6) When accepting a touch operation, the ECU 5 intermittently performs a notification operation using sound as an acceptance response to the touch operation. This configuration allows the user to recognize that the operation performed by the user to use the electrostatic sensor 4 as an input switch has been normally accepted.
(7) Under the condition that a touch operation on the electrostatic sensor 4 is cancelled before the execution period of an acceptance response expires, the ECU 5 lifts or lowers the window glass, which is started by the operation. This configuration invalidates an operation input if a cancellation operation is not performed before the cancellation waiting time elapses.
(8) Under the condition that a touch operation is cancelled after the touch operation is accepted, the ECU 5 lifts or lowers the window glass 3, which is started by the touch operation. In this configuration, the window glass 3 is not moved until the touch operation is cancelled. This ensures security.
(9) The ECU 5 performs both of an opening operation switch mode control and a closing operation switch mode control in order from the one having a higher priority. When detecting a further touch operation on the electrostatic sensor 4 while performing the control having a higher priority, the ECU 5 accepts the touch operation as a touch operation related to the higher-priority control and does not accept a touch operation related to the control having a lower priority. Thus, once the touch operation related to the higher-priority control is accepted, this configuration eliminates the need to wait for an input of a touch operation related to the lower-priority control. Further, the former priority control can be exclusively performed.
(10) In the power window device 1, when the user wishes to open or close the window glass 3 without touching the operation switch because his or her hand or the operation switch is stained, the user can open and close the operation switch only with a single sensor (electrostatic sensor 4) prepared for entrapment detection without operating a conventional switch or adding a new switch.
(11) When entrapment occurs during a lifting movement of the window glass 3 that is started as an automatic up operation using the electrostatic sensor 4, entrapment is detected by the electrostatic sensor 4. Thus, an entrapment subject can be released by reversing the movement of the window glass 3. This is an advantage of the present configuration that allows the entrapment detection electrostatic sensor 4 to be used as an input switch.
(12) A single input of the entrapment detection sensor (electrostatic sensor 4) allows for an easy, safe intuitive power window operation without touching an operation switch.

The above embodiment may be modified as described below.

The ECU 5 may control the switch mode based only on time and does not need to perform a notification operation. Thus, the notification unit 6 may be omitted.

As a switch mode control, the ECU 5 may first perform a closing operation switch mode control and then performs an opening operation switch mode control. In this case, once the automatic up operation is accepted, the automatic down operation may not be accepted.

As a switch mode control, the ECU 5 may first perform an opening operation switch mode control and then perform a closing operation switch mode control. Then, the ECU 5 may perform an opening operation switch mode control again and subsequently perform a closing operation switch mode control. The opening operation switch mode control and the closing operation switch mode control are both not limited to two times and may be repeated a specified number of times.

The power window device 1 may be configured so that a touch operation on the electrostatic sensor 4 can be accurately detected at the fully-open position and the fully-closed position while setting the electrostatic sensor 4 at a position where a touch operation is detectable.

The position of the window glass 3 may be detected. In this case, a method for monitoring a pulse in accordance with a rotation speed of a motor, which serves as a drive source, a method for monitoring a current value of the motor, a method for monitoring a signal of a fully-closed switch, or the like may be used as a method for detecting the position of the window glass 3.

An additional function such as stopping movement of the window glass 3 may be added when the electrostatic sensor 4 is touched during a lifting movement of the window glass 3, which is started by an automatic up operation using the electrostatic sensor 4, or during a lowering movement of the window glass 3, which is started by an automatic down operation using the electrostatic sensor 4. That is, the electrostatic sensor 4 may be used as an input switch for stopping the opening and closing movements.

The two differently pitched sounds are not limited to a combination of a low-pitched "Do" and a high-pitched "Do" and may be a combination of two other sounds in which the user can associate lifting of the window glass 3 with a high-pitched sound and lowering of the window glass 3 with a low-pitched sound. Alternatively, human voice, bird chirping, or the like may be used. As another option, a voice message such as "window glass can be lifted" or "window glass can be lowered" may be used.

Instead of and in addition to a notification operation using sound, for example, a notification operation performed through a display using a head-up display arranged in front of a driver seat may be performed. Alternatively, a notification operation performed by vibrating a seat or a steering wheel may be performed. Accordingly, the notification unit 6 is not limited to a voice output device.

The control period of the opening operation switch mode (in the above embodiment, lowering operation switch mode) and the control period of the closing operation switch mode (in the above embodiment, lifting operation switch mode) are not limited to approximately one second and may be set to any period.

The present invention may be applied to an opening/closing controller that controls an opening/closing body such as a shutter of a building in which an opening movement is defined by a lifting operation and a closing movement is defined by a lowering operation. In this case, the lifting operation switch mode control using the entrapment detection sensor as a lifting movement instruction input switch may be performed with the notification operation using the higher one of two differently pitched sounds, and the lowering operation switch mode control using the entrapment detection sensor as a lowering movement instruction input switch may be performed with the notification operation using the low-pitched sound.

The present invention may be applied to an opening/closing controller that controls an opening/closing body that moves in the horizontal direction, for example, a sliding door of a vehicle or an automatic door of a building.

The present invention may be applied to an opening/closing controller that controls a sunroof or the like of a vehicle.

## Claims

1. An opening/closing controller that is configured to control movement of an opening/closing body, the opening/closing controller comprising:
an entrapment detection sensor configured to detect entrapment when the opening/closing body moves; and
a control unit configured to perform a switch mode control using the entrapment detection sensor as an input switch for an opening/closing body operation when detecting an operation input to the entrapment detection sensor while movement of the opening/closing body is stopped.

2. The opening/closing controller according to claim 1, wherein the control unit is configured to perform, as the switch mode control, both of an opening operation switch mode control that uses the entrapment detection sensor as an opening movement instruction input switch and a closing operation switch mode control that uses the entrapment detection sensor as a closing movement instruction input switch.

3. The opening/closing controller according to claim 1 or 2, wherein
the control unit is configured to perform the switch mode control while performing a notification operation that uses sound as a response to the operation input when the control unit detects the operation input to the entrapment detection sensor while movement of the opening/closing body is stopped,
one of a lifting movement and a lowering movement of the opening/closing body defines an opening movement of the opening/closing body, and the other one of the lifting movement and the lowering movement of the opening/closing body defines an closing movement of the opening/closing body, and
the control unit is configured to perform a lifting operation switch mode control that uses the entrapment detection sensor as a lifting movement instruction input switch while performing the notification operation using a high-pitched sound among two differently pitched sounds and perform a lowering operation switch mode control that uses the entrapment detection sensor as a lowering movement instruction input switch while performing the notification operation using a low-pitched sound among the two differently pitched sounds.

4. The opening/closing controller according to claim 3, wherein the control unit is configured such that, when the control unit detects a further operation input to the entrapment detection sensor while performing the notification operation using sound, the control unit accepts the further operation input as an execution request for the opening/closing body operation.

5. The opening/closing controller according to claim 4, wherein
the control unit is configured to intermittently perform the notification operation using sound as an acceptance response to the execution request when accepting the further operation input as the execution request, and
the control unit is configured such that, under the condition that the further operation input to the entrapment detection sensor is cancelled before an execution period of the acceptance response expires, the control unit moves the opening/closing body in correspondence with the further operation input accepted as the execution request.

6. The opening/closing controller according to claim 4, wherein the control unit is configured such that, under the condition that the further operation input is cancelled after the further operation input is accepted as the execution request, the control unit moves the opening/closing body in correspondence with the further operation input accepted as the execution request.

7. The opening/closing controller according to any one of claims 1 to 6, wherein
the control unit is configured to perform, as the switch mode control, both of an opening operation switch mode control that uses the entrapment detection sensor as an opening movement instruction input switch and a closing operation switch mode control that uses the entrapment detection sensor as a closing movement instruction input switch in order from one of the opening operation switch mode control and the closing operation switch mode control having a higher priority, and
the control unit is configured such that, when detecting a further operation input to the entrapment detection sensor while performing one of the opening operation switch mode control and the closing operation switch mode control having a higher priority, the control unit accepts the further operation input as an operation input related to the control having a higher priority and does not accept an operation input related to the control having a lower priority.

8. The opening/closing controller according to any one of claims 1 to 7, wherein
the control unit is configured to detect, as a switch mode start request for starting the switch mode control, a first operation input to the entrapment detection sensor performed while movement of the opening/closing body is stopped, and
the control unit is configured to detect, as an execution request for the opening/closing body operation, a second operation input to the entrapment detection sensor performed after the switch mode start request is detected.
